# EUROPEAN PATENT APPLICATION

(11) **EP 3 766 579 A1**
(43) Date of publication of application: **20.01.2021**
(21) Application number: 19382610.4
(22) Date of filing: 19.07.2019
(51) Int. Cl.: B01L 3/00

(54) **CONTAINER FOR BIOLOGICAL SAMPLES**

(71) Applicant: Illinois Tool Works Inc., Glenview, IL 60025 (US)
(72) Inventor: Martin Sanchez, Laura, 08211 Barcelona (ES); Lacoma Martinez, Montserrat, 08211 Barcelona (ES); Fortuny Cuadra, Aleix Heribert, 08225 Barcelona (ES); Caubet Canals, Marina, 08225 Barcelona (ES)
(74) Representative: HGF

(57) **Abstract**

The container for biological samples comprises a first recipient (1) for a biological sample and a second recipient (2), wherein said first and second recipients (1, 2) are separated by a bidirectional valve (4) that is permeable to liquids, and the first recipient (1) and the second recipient (2) are connected by a stopper (6).

Thanks to this feature, the fixative liquid can be transferred between the first and second recipients, but the sample, when present in the first recipient, cannot be transferred to the second recipient.

## Description

The present invention refers to a container for biological samples, which permits to collect, preserve and transport a biological sample, such as e.g. a tissue sample.

### Background of the invention

Histopathological analysis protocols require that the tissue samples obtained from patients must be treated quickly using a fixative liquid as a preservative agent, prior sending to the laboratory in order to be processed.

The formaldehyde is the most commonly fixative used, which its toxic effects are well known.

Currently, the clinician is exposed to formaldehyde when he/she introduces the sample (biopsy) into the container with formaldehyde.

Nowadays, after taking the sample, the hospital staff, opens the container containing the formaldehyde, places the sample inside, closes the container and send to the pathology laboratory.

Important risks of spilling and inhalation of formaldehyde exist in this procedure, which constitutes a danger to health.

Therefore, one purpose of the present invention is to provide a container for biological samples that avoids the contact of the healthcare professional with the fixative liquid and that permit the collection, preservation and transport of biological samples in said fixative liquid.

### Description of the invention

With the container for biological samples according to the present invention it is possible to solve said drawbacks, providing other advantages that are described below.

The container for biological samples according to the present invention comprises a first recipient for a biological sample and a second recipient, wherein said first and second recipients are separated by a bidirectional valve that allows the transfer of the liquid between recipients.

Thanks to this feature, the fixative liquid can be transferred between the first and second recipients, but the sample, when present in the first recipient, cannot be transferred to the second recipient.

Advantageously, the first recipient and the second recipient are connected by a stopper.

According to a preferred embodiment, said first recipient and said second recipient comprises threaded necks that are engaged with a thread provided in said stopper.

Furthermore, said stopper comprises a grid that allows the separation of the sample from the fixative liquid and a barb that helps to deposit the sample on the stopper.

According to said embodiment, said stopper also comprises a housing for said bidirectional valve.

For permitting a stable placement of the container on a flat surface, said first and second recipients comprises an end that is wider than the other end, and said wider end is the end opposite to the threaded neck.

### Brief description of the drawings

For a better understanding the above explanation and for the sole purpose of providing an example, some non-limiting drawings are included that schematically depict a practical embodiment.
Figure 1 is a frontal view of the container according to the present invention in an exploded view;
Figure 2 is a view of the central portion of the container according to the present invention, showing the stopper in a section view;
Figure 3 is a perspective view of the central portion of the container according to the present invention, with the second recipient separated from the stopper;
Figure 4 is a perspective view of the central portion of the container according to the present invention, with the first recipient separated from the stopper;
Figure 5 is a frontal view of the container according to the present invention in the closed position.
Figure 6 is a perspective view of the stopper 6 used in the container according to the present invention, where the grid 9 and the barb 11 can be seen.

### Description of a preferred embodiment

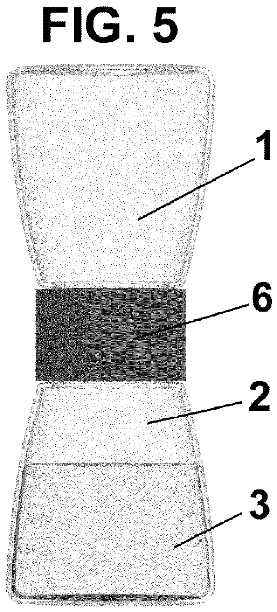

The drawings show a preferred embodiment of the container for biological samples according to the present invention, comprising a first recipient 1 for placing a biological sample and a second recipient 2 for placing initially a fixative liquid 3, e.g. formaldehyde (see Figure 5).

Between said first and second recipients 1, 2 is placed a bidirectional valve 4 that allows transfer liquids from one to another recipient, i.e. the fixative liquid 3 can be transferred between the first and second recipients 1, 2, (and vice versa) but the biological sample always remain in the first recipient 1, as will be described hereinafter.

Said bidirectional valve 4 is placed in a housing 5 of a stopper 6 and said stopper 6 comprises a thread 10 to be engaged in a threaded neck 7, 8 of the recipients 1, 2.

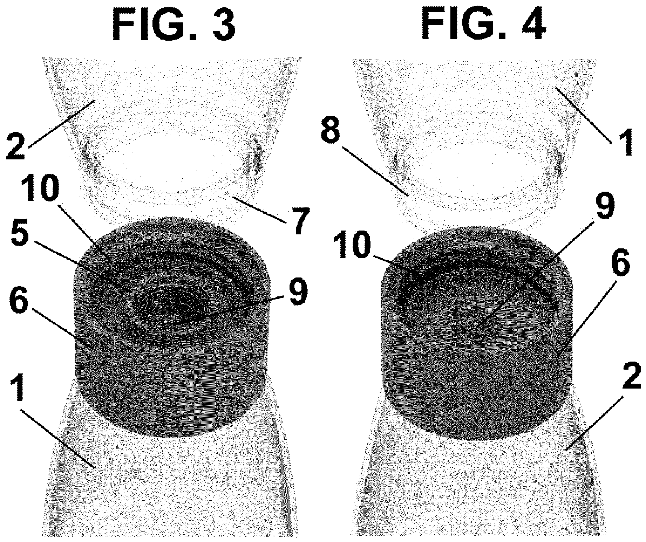

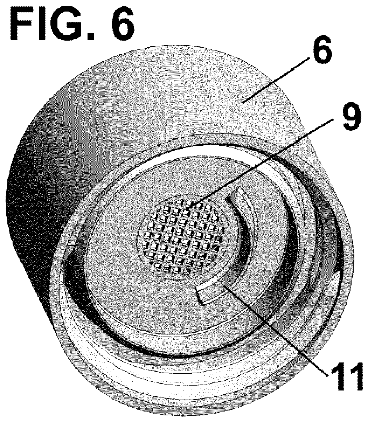

Said stopper 6 also comprises a grid 9, as shown in Figures 3 and 4 for further preventing the passage of the biological sample from the first recipient 1 to the second recipient 2 and at the same time allowing the passage of fixative liquid 3. Said stopper 6 also comprises a barb 11 (Fig. 6) for help to deposit the sample on the stopper.

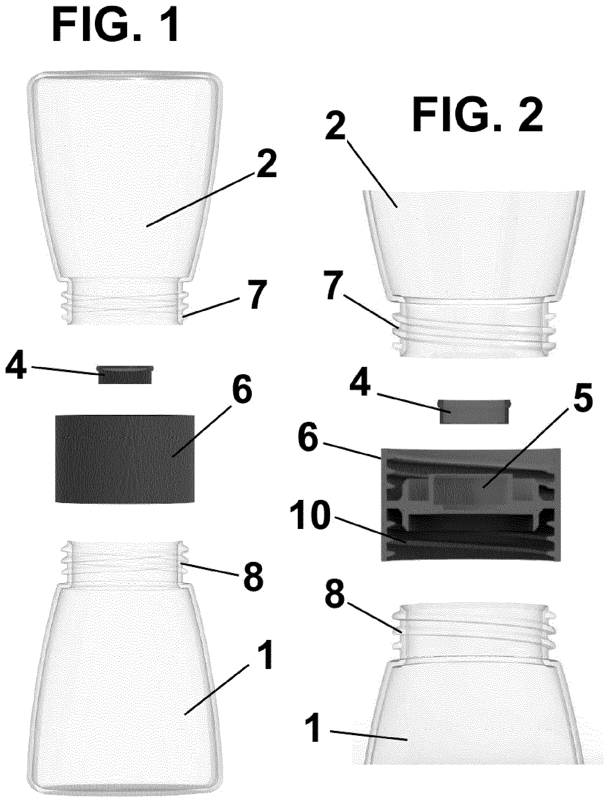

Furthermore, as shown in Figures 1 and 5, one end of the first recipient 1 and of the second recipient 2 is wider than the rest of the recipient. This wider end permits to place the container in a stable position on a horizontal surface.

The operation of the container according to the present invention is the following:
Before its use, the fixative liquid 3 is placed in the second recipient 2 with the container in the position shown in Figure 5, so that the fixative liquid 3 is only in the second recipient 2.

For placing a biological sample in the first recipient 1, said first recipient 1 is unscrewed from the stopper 6 and the biological sample is placed in the grid 9, shown in Figure 4. The barb 11 (Figure 6) helps to deposit the sample.

Once the biological sample is in placed in the grid 9 (Figure 4), the first recipient 1 is screwed to the stopper and the position of the container is inversed, so that the fixative liquid 3 from the second recipient 2 is transferred to the first recipient 1 through the bidirectional valve 4, by lightly pressing the walls of recipient 2. This way, the biological sample is in contact with the fixative liquid for its conservation during its transportation.

For removing the biological sample from the container, the operation is inverted, i.e. first the fixative liquid 3 is transferred to the second recipient 2 by lightly pressing the walls of recipient 1 and then the first recipient 1 is unscrewed from the stopper 6.

When the first recipient 1 is unscrewed, the user can remove the biological sample from the stopper grid 9 (Figure 4), keeping the fixative liquid in the second recipient.

Therefore, the biological sample can be transported in contact with the fixative liquid for its conservation, but the user never contacts with the fixative liquid 3, at the time of placing the sample in the container and afterwards removing the sample from the container.

Even though reference has been made to a specific embodiment of the invention, it is obvious for a person skilled in the art that the container for biological samples described herein is susceptible to numerous variations and modifications, and that all of the details mentioned can be substituted for other technically equivalent ones without departing from the scope of protection defined by the attached claims.

## Claims

1. Container for biological samples, comprising a first recipient (1) for a biological sample and a second recipient (2), **characterized in that** said first and second recipients (1, 2) are separated by a bidirectional valve (4) that is permeable to liquids.

2. Container for biological samples according to claim 1, wherein the first recipient (1) and the second recipient (2) are connected by a stopper (6).

3. Container for biological samples according to claim 2, wherein said first recipient (1) and said second recipient (2) comprises threaded necks (7, 8) that are engaged with a thread (10) provided in said stopper (6).

4. Container for biological samples according to claim 2 or 3, wherein said stopper (6) comprises a grid (9).

5. Container for biological samples according to anyone of claims 2-4, wherein said stopper (6) also comprises a barb (11).

6. Container for biological samples according to anyone of previous claims 2-5, wherein said stopper (6) comprises a housing (5) for said bidirectional valve (4).

7. Container for biological samples according to claim 1, wherein said recipients (1, 2) comprises an end that is wider than the other end.

8. Container for biological samples according to claims 3 and 7, wherein said wider end is the end opposite to the threaded neck (7, 8).
